# EUROPÄISCHE PATENTSCHRIFT

(11) **EP 2 661 558 B1**
(45) Veröffentlichungstag und Bekanntmachung des Hinweises auf die Patenterteilung: **25.07.2018**
(21) Anmeldenummer: 10790566.3
(22) Anmeldetag: 14.12.2010
(51) Int. Cl.: F04B 53/16, F04D 29/58, H02K 7/14, H02K 9/19, F04B 17/03, F04B 53/08, H02K 5/20, B08B 3/02

(54) **MOTORPUMPENEINHEIT FÜR EIN HOCHDRUCKREINIGUNGSGERÄT SOWIE HOCHDRUCKREINIGUNGSGERÄT**
MOTOR PUMP UNIT FOR A HIGH-PRESSURE CLEANING DEVICE, AND HIGH-PRESSURE CLEANING DEVICE
UNITÉ MOTEUR POMPE POUR UN APPAREIL DE NETTOYAGE À HAUTE PRESSION AINSI QU'APPAREIL DE NETTOYAGE À HAUTE PRESSION

(43) Veröffentlichungstag der Anmeldung: 13.11.2013
(73) Patentinhaber: Alfred Kärcher GmbH & Co. KG, 71364 Winnenden (DE)
(72) Erfinder: DIRNBERGER, Sven, 71711 Steinheim (DE); SPENGLER, Timo, 71263 Weil der Stadt (DE); BAREITER, Rudi, 71576 Burgstetten (DE); FISCHER, Markus, 71364 Winnenden (DE); KLÖPFER, Jürgen, 71576 Burgstetten (DE); RUBBE, Alexander, 71364 Winnenden (DE)
(74) Vertreter: Hoeger, Stellrecht & Partner Patentanwälte mbB
(86) Internationale Anmeldenummer: PCT/EP2010/069664
(87) Internationale Veröffentlichungsnummer: WO 2012/079623

(56) Entgegenhaltungen:
- WO-A1-2010/091698
- WO-A1-2010/091699
- WO-A1-2010/091965
- DE-A1- 19 849 573
- GB-A- 246 323
- US-A- 2 338 154
- US-A- 6 146 113

## Beschreibung

Die Erfindung betrifft ein Hochdruckreinigungsgerät mit einer Motorpumpeneinheit nach dem Oberbegriff von Anspruch 1.

Eine Motorpumpeneinheit für ein Hochdruckreinigungsgerät ist beispielsweise in der DE 31 15 698 C1 beschrieben. Zum Schutz des Motors ist ein dessen Rotor und Stator mantelförmig umgebendes Motorgehäuse vorgesehen, über das auch die Wärme des Motors abgeführt werden kann. Um das Motorgehäuse zu kühlen, bildet ein Teil der dem Pumpaggregat vorgelagerten Saugleitung für Reinigungsflüssigkeit einen Kühlkanal. In der DE 31 15 698 C1 wird vorgeschlagen, den Kühlkanal als Ringspalt im Motorgehäuse integral den Motor umgebend auszubilden. Alternativ kann vorgesehen sein, den Kühlkanal als in das Motorgehäuse eingebettetes schraubenförmiges Rohr zu bilden.

Weiter sind im Stand der Technik Motorpumpeneinheiten bekannt, bei denen der Kühlkanal durch einen von der angesaugten Reinigungsflüssigkeit durchströmten Kühltopf realisiert wird, in den das Motorgehäuse eintaucht.

In der WO 2010/091698 A1 ist eine Motorpumpeneinheit für ein Hochdruckreinigungsgerät beschrieben. Die Motorpumpeneinheit weist die sich auf die Motorpumpeneinheit beziehenden Merkmale des Oberbegriffs von Anspruch 1 auf. Die Motorpumpeneinheit umfasst einen Motor und ein von diesem angetriebenes Pumpaggregat. Der Kühlkanal umgibt das Motorgehäuse und ist ein Teil der Saugleitung, über die dem Pumpaggregat unter Druck zu setzende Reinigungsflüssigkeit zuführbar ist.

Vergleichbare Motorpumpeneinheiten für Hochdruckreinigungsgeräte sind in den Druckschriften WO 2010/091965 A1 und WO 2010/091699 A1 beschrieben.

Die DE 196 52 706 A1 beschreibt eine Motorpumpeneinheit zur Umwälzung eines Hydrauliköls. Der Motor der Motorpumpeneinheit umfasst ein Motorgehäuse, das von einem Luftspalt umgeben ist. Ein Lüfterrad ist vorgesehen, mit dem Kühlluft für den Motor durch den Luftspalt hindurch geblasen wird, d. h. der Motor ist luftgekühlt. Die vom Lüfterrad angesaugte Saugluft durchströmt einen Kühler, der von der umgewälzten Hydraulikflüssigkeit durchströmt wird. Dadurch kann die Kühlluft gleichzeitig zum Kühlen der Hydraulikflüssigkeit eingesetzt werden. Die Hydraulikflüssigkeit ist in einem den Luftspalt umgebenden Behälter bevorratet.

In der US 2,338,154 ist ein flüssigkeitsgekühlter Elektromotor beschrieben. In einem Motorgehäuse sind eine Vielzahl von jeweils parallel zu einer Achse des Motors verlaufenden Durchgängen gebildet. In die Durchgänge sind von einer Kühlflüssigkeit durchströmbare Leitungen eingesetzt. Die Kühlflüssigkeit wird über eine gesonderte Kühlflüssigkeitsversorgungseinrichtung bereitgestellt.

Die DE 198 49 573 A1 offenbart einen flüssigkeitsgekühlten Elektromotor. Einen Stator umgebend weist der Elektromotor zwei voneinander beabstandete und thermisch isolierte Kühlschichten auf. In der jeweiligen Kühlschicht sind eine Vielzahl von parallel zu einer Achse des Motors oder schraubenförmig verlaufenden Fluidkanälen gebildet.

Auch die GB 246 323 beschreibt einen flüssigkeitsgekühlten Elektromotor. Ein Motorgehäuse des Elektromotors weist eine radiale Erhebung auf, in der ein umlaufender Kühlkanal gebildet ist.

Bei der Reinigungsflüssigkeit handelt es sich üblicherweise um Wasser, dem eine Reinigungschemikalie zur Steigerung der Reinigungswirkung zugesetzt sein kann. Unter Umständen ist die Reinigungsflüssigkeit so aggressiv, dass sie bei herkömmlichen Motorpumpeneinheiten in Folge von Korrosion der Wandungen des Kühlkanals und insbesondere des Motorgehäuses in dessen Inneres eindringt und dadurch die elektrische Sicherheit der Motorpumpeneinheit gefährdet.

Aufgabe der vorliegenden Erfindung ist es, ein Hochdruckreinigungsgerät der eingangs genannten Art bereitzustellen, dessen elektrische Sicherheit gegenüber einem herkömmlichen Hochdruckreinigungsgerät erhöht ist.

Diese Aufgabe wird erfindungsgemäß durch ein Hochdruckreinigungsgerät mit den Merkmalen von Anspruch 1 gelöst.

Vorstehende Ausgestaltung der Motorpumpeneinheit erlaubt es, zwischen dem Motorgehäuse und dem Kühlkanal einen Zwischenraum vorzusehen. Der Zwischenraum ist durch das mindestens eine Abstandselement überbrückt, das den Kühlkanal in, bezogen auf den Motor, radialen Abstand zum Motorgehäuse bringt. Korrodiert der Kühlkanal unter dem Einfluss der Reinigungsflüssigkeit, kann die Reinigungsflüssigkeit zwar in den Zwischenraum zwischen dem Motorgehäuse und dem Kühlkanal eintreten. Jedoch bleibt der Motor durch das nicht korrodierte Motorgehäuse vor der sich im Zwischenraum sammelnden Reinigungsflüssigkeit geschützt, so dass die elektrische Sicherheit der Motorpumpeneinheit gegenüber derjenigen herkömmlicher Motorpumpeneinheiten erhöht ist. Dennoch kann die Kühlung des Motors gewährleistet werden. Weil das mindestens eine Abstandselement wärmeleitfähig ist, kann Abwärme des Motors vom Motorgehäuse gezielt an die Reinigungsflüssigkeit im Kühlkanal abgegeben werden.

Günstig ist es, wenn der zwischen dem Motorgehäuse und dem Kühlkanal gebildete, vom mindestens einen Abstandselement überbrückte Zwischenraum gasgefüllt ist. Zum Einen erlaubt die geringe Wärmeleitfähigkeit des Gases, insbesondere Luft, die Abwärme des Motors gezielt über das mindestens eine Abstandselement vom Motorgehäuse an den Kühlkanal abzuführen. Zum Anderen ermöglicht die hohe Kompressibilität des Gases, dass im Zwischenraum eine vergleichsweise große Menge von aus dem Kühlkanal austretender Reinigungsflüssigkeit aufgenommen werden kann.

Von Vorteil ist es, wenn das mindestens eine Abstandselement einstückig mit dem Motorgehäuse ausgebildet ist und/oder wenn das mindestens eine Abstandselement einstückig mit einer dem Motorgehäuse zugewandten Innenwandung des Kühlkanals ausgebildet ist. Dies ermöglicht eine konstruktiv einfache Herstellung der Motorpumpeneinheit. "Motorgehäuse" kann sich vorliegend auch auf den wesentlichen den Motor umgebenden Teil des Motorgehäuses beziehen. Beispielsweise umfasst das Motorgehäuse einen den Motor umgebenden Gehäusemantel, der einstückig mit dem mindestens einen Abstandselement gefertigt ist. Besonders bevorzugt sind das Motorgehäuse, das mindestens eine Abstandselement und zumindest die Innenwandung des Kühlkanals einstückig gebildet. "Innenwandung" bedeutet vorliegend eine dem Motorgehäuse zugewandte Wandung des Kühlkanals in, bezüglich des Motors, radialer Richtung.

Als günstig hat es sich erwiesen, wenn das mindestens eine Abstandselement mit dem Motorgehäuse und/oder wenn das mindestens eine Abstandselement mit der Innenwandung des Kühlkanals aus Aluminium oder einer Aluminiumlegierung gefertigt ist. Der Einsatz von Aluminium oder einer Aluminiumlegierung verleiht dem Motorgehäuse, dem mindestens einen Abstandselement und/oder der Innenwandung des Kühlkanals eine besonders hohe Wärmeleitfähigkeit. Dies ermöglicht eine zuverlässige und gezielte Wärmeabfuhr an die Reinigungsflüssigkeit.

Als vorteilhaft für eine kostengünstige und herstellungstechnisch einfache Fertigung der Motorpumpeneinheit hat es sich erwiesen, wenn das mindestens eine Abstandselement mit dem Motorgehäuse und/oder mit der Innenwandung des Kühlkanals als Druckgussteil gefertigt ist, insbesondere als Aluminiumdruckgussteil. Besonders bevorzugt handelt es sich bei dem Motorgehäuse, dem mindestens einen Abstandselement und der Innenwandung um ein einstückiges Aluminiumdruckgussteil.

Bei einer andersartigen bevorzugten Ausführungsform ist das mindestens eine Abstandselement mit dem Motorgehäuse und/oder mit der Innenwandung des Kühlkanals als Strangpressteil gefertigt, insbesondere als Aluminiumstrangpressteil. Selbst komplexe Strukturen des mindestens einen Abstandselementes können durch Strangpressen in Großserie wirtschaftlich gefertigt werden.

Es kann auch vorgesehen sein, dass eine dem Motorgehäuse zugewandte Innenwandung des Kühlkanals auf das mindestens eine Abstandselement aufgeschrumpft ist. Als Aufschrumpfteil zum Beispiel aus Aluminium oder einer Aluminiumlegierung ausgebildet, lässt sich die Innenwandung auf konstruktiv einfache und zugleich robuste Weise mit dem mindestens einen Abstandselement verbinden.

Bei einer vorteilhaften Ausführungsform kann der Kühlkanal als Rohrleitung vorgesehen sein, der durch das mindestens eine Abstandelement gewissermaßen bezüglich des Motorgehäuses "aufgebockt" ist.

Bei einer andersartigen bevorzugten Ausführungsform ist es günstig, wenn eine dem Motorgehäuse zugewandte Innenwandung des Kühlkanals als dieses umgebender Innenmantel ausgestaltet ist, der außenseitig von der Reinigungsflüssigkeit umströmt wird. Dies ermöglicht nicht nur eine konstruktiv einfache Ausgestaltung der Motorpumpeneinheit, sondern auch eine zuverlässige Wärmeabgabe an die Reinigungsflüssigkeit. Zu diesem Zweck kann die Reinigungsflüssigkeit die außenseitige Mantelfläche des Innenmantels flächig umströmen. Der Innenmantel kann zum Beispiel einstückig mit dem mindestens einen Abstandselement gebildet sein oder auf dieses aufgeschrumpft sein.

Vorzugsweise umfasst der Kühlkanal auf der dem Motorgehäuse abgewandten Seite eine den Innenmantel umgebende Außenwandung in Gestalt eines Außenmantels. Der Außenmantel begrenzt den Kühlkanal außenseitig, so dass zwischen ihm und dem Innenmantel ein von der Reinigungsflüssigkeit durchströmbarer Spalt gebildet ist. Der Einsatz des Außenmantels erlaubt eine kostengünstige und einfache Herstellung der Motorpumpeneinheit. Beispielsweise kann der Außenmantel über den Innenmantel gestülpt und mit diesem etwa durch Verschrauben verbunden werden. Insbesondere in Kombination mit der einstückigen Ausgestaltung des Innenmantels, des Motorgehäuses und des mindestens einen Abstandselementes miteinander lässt sich dadurch eine konstruktiv besonders einfache Ausgestaltung erzielen.

Vorteilhafterweise sind der Außenmantel, der Innenmantel und das Motorgehäuse koaxial zueinander ausgerichtet bezüglich einer Motorwelle des Motors.

Es kann vorgesehen sein, dass zwei axial voneinander beabstandete, außenseitig am Innenmantel angeordnete Wandungen den Kühlkanal in axialer Richtung, bezogen auf die Motorwelle, begrenzen. Die Wandungen begrenzen den Kühlkanal axial, d.h. stirnseitig und sind vorzugsweise als den Innenmantel ringförmig umgebende Rippen ausgebildet. Die Wandungen können vorzugsweise einstückig mit dem Innenmantel gebildet sein. Auch eine einstückige Ausbildung mit dem Außenmantel kann vorgesehen sein. Ferner kann vorgesehen sein, dass in die Wandungen Dichtelemente zur Abdichtung zwischen Innenmantel und Außenmantel integriert sind.

Günstigerweise ist in einer Wandung des Kühlkanals eine Einlassöffnung für die Reinigungsflüssigkeit und eine Auslassöffnung für die Reinigungsflüssigkeit gebildet, durch die hindurch Reinigungsflüssigkeit in den Kühlkanal ein- bzw. aus dem Kühlkanal austreten kann. Vorliegend handelt es sich hierbei nicht unbedingt um "genau eine Wandung", so dass die Einlassöffnung und die Auslassöffnung auch in unterschiedlichen Wandungen des Kühlkanals gebildet sein können.

Zusätzlich zur Auslassöffnung kann in einer Wandung des Kühlkanals eine Entleerungsöffnung gebildet sein, über die der Kühlkanal in eine Abgabeleitung mündet, mittels derer er an die Saugseite des Pumpaggregates angeschlossen ist, wobei der Querschnitt der Entleerungsöffnung vorzugsweise wesentlich geringer ist als der Querschnitt der Auslassöffnung. Wird die Motorpumpeneinheit etwa winters stillgelegt, sollte die restliche im Kühlkanal vorhandene Reinigungsflüssigkeit mit angeschaltetem Pumpaggregat möglichst aus dem Kühlkanal abgesaugt werden können, ohne dass die Motorpumpeneinheit an einen Versorgungsschlauch angeschlossen ist, um Schäden durch im Kühlkanal gefrierende Reinigungsflüssigkeit zu vermeiden. Hierbei hilft die Entleerungsöffnung, so dass nur soviel Reinigungsflüssigkeit im Kühlkanal verbleibt, dass selbst bei Frost keine Beschädigung der Motorpumpeneinheit erfolgt. Günstigerweise ist die Entleerungsöffnung zu diesem Zweck unterhalb der Auslassöffnung angeordnet, bezogen auf eine Gebrauchsstellung der Motorpumpeneinheit. Im Normalbetrieb der Motorpumpeneinheit verlässt die strömende Reinigungsflüssigkeit den Kühlkanal demgegenüber nahezu vollständig durch die Auslassöffnung, deren Querschnitt deutlich größer ist als diejenige der Entleerungsöffnung, über die die Reinigungsflüssigkeit hinwegströmt.

Als vorteilhaft hat es sich erwiesen, wenn die Einlassöffnung und/oder die Auslassöffnung für die Reinigungsflüssigkeit im Innenmantel gebildet sind. Dadurch lässt sich eine kompakte Bauform der Motorpumpeneinheit erzielen. Speziell bei Fertigung des Innenmantels mittels des vorstehend erwähnten Druckgussverfahrens lassen sich die Einlassöffnung und die Auslassöffnung konstruktiv einfach ausbilden. Auch die Entleerungsöffnung kann im Innenmantel gebildet sein.

Bei einer andersartigen bevorzugten Ausführungsform kann vorgesehen sein, dass die Einlassöffnung und/oder die Auslassöffnung an einer der vorstehend erwähnten stirnseitigen Wandungen des Kühlkanals gebildet sind, etwa in einer der den Innenmantel außenseitig umgebenden Rippen. Entsprechendes gilt für die Entleerungsöffnung.

Von Vorteil ist es, wenn im Zwischenraum zwischen dem Innenmantel und dem Motorgehäuse eine Zuführleitung angeordnet ist, die über die Einlassöffnung in den Kühlkanal mündet, und/oder wenn im Zwischenraum zwischen dem Innenmantel und dem Motorgehäuse eine Abgabeleitung angeordnet ist, die über die Auslassöffnung in den Kühlkanal mündet. Die Saugleitung kann gewissermaßen zumindest drei Abschnitte umfassen, nämlich die Zuführleitung, den Kühlkanal und die Abgabeleitung, wovon die Zuführleitung und die Abgabeleitung vorzugsweise zwischen dem Motorgehäuse und dem Innenmantel verlaufen. Dies ermöglicht eine besonders kompakte Bauform der Motorpumpeneinheit, bei der außen am Außenmantel kein Platz für die Zuführ- und/oder die Abgabeleitung benötigt wird.

Günstig ist es, wenn Wandungen der Zuführleitung und/oder der Abgabeleitung zumindest teilweise einstückig mit dem Innenmantel gebildet sind, um eine konstruktiv einfache Ausgestaltung der Motorpumpeneinheit zu ermöglichen. Beispielsweise sind die Zuführleitung und/oder die Abgabeleitung durch das vorstehend erwähnte Druckgussverfahren oder Strangpressverfahren zusammen mit dem Innenmantel hergestellt.

Weiter wird eine möglichst kompakte Bauform der Motorpumpeneinheit dadurch ermöglicht, dass die Zuführleitung und die Abgabeleitung auf der dem Pumpaggregat zugewandten Seite aus dem Zwischenraum austreten. Der Anschluss der Abgabeleitung an die Saugseite des Pumpaggregates lässt sich auf diese Weise unter Einsatz einer Verbindungsleitung von nur geringer Länge bewerkstelligen. Die Zuführleitung tritt ebenfalls in Richtung des Pumpaggregates aus dem Zwischenraum aus, was einen Anschluss der Zuführleitung an ein Wasserversorgungsnetz an dem das Pumpaggregat aufweisenden Ende der Motorpumpeneinheit ermöglicht. Wenn der Druckausgang an demselben Ende der Motorpumpeneinheit angeordnet ist, kann der Benutzer einen an das Wasserversorgungsnetz angeschlossenen Versorgungsschlauch und den Hochdruckschlauch in einem Arbeitsgang und an derselben Position des Hochdruckreinigungsgerätes anschließen. Dies erweist sich in der Praxis als vorteilhaft für die Handhabung des Hochdruckreinigungsgerätes.

Vorzugsweise weist die Motorpumpeneinheit mindestens eine im Kühlkanal, insbesondere außenseitig am Innenmantel, angeordnete Scheidewand auf, auf deren einander abgewandten Seiten, bezogen auf die den Kühlkanal durchströmende Reinigungsflüssigkeit, die Einlassöffnung und die Auslassöffnung angeordnet sind. Längs der mindestens einen Scheidewand kann die Strömung der Reinigungsflüssigkeit zum Beispiel auf definierte Weise von der Einlassöffnung zur Auslassöffnung geführt werden. Insbesondere kann die Scheidewand den Innenmantel umlaufen, so dass durch die Einlassöffnung in den Kühlkanal eintretende Reinigungsflüssigkeit den Innenmantel umströmen kann, bevor sie durch die Auslassöffnung aus dem Kühlkanal austritt. Die mindestens eine Scheidewand erlaubt es sicherzustellen, dass die Reinigungsflüssigkeit den Innenmantel, ohne direkt von der Einlassöffnung zur Auslassöffnung zu strömen, möglichst lang kontaktiert, um die Abwärme des Motors wirkungsvoll abzuführen.

Bei einer konstruktiv einfachen Ausgestaltung ist die mindestens eine Scheidewand günstigerweise einstückig mit dem Innenmantel gebildet, beispielsweise mittels des vorstehend erwähnten Druckgussverfahrens oder des Strangpressverfahrens.

Von Vorteil ist es, wenn die mindestens eine Scheidewand den Innenmantel schraubenförmig umgibt und diesen günstigerweise mindestens einmal umläuft. Dadurch wird die Reinigungsflüssigkeit zumindest zweimal schraubenförmig um den Innenmantel herum geführt und eine zuverlässige Wärmeabfuhr ermöglicht.

In Strömungsrichtung der Reinigungsflüssigkeit von der Einlassöffnung zur Auslassöffnung können im Kühlkanal, insbesondere außenseitig am Innenmantel, Strömungsumlenkelemente angeordnet sein, um eine schlangenlinien- oder mäanderförmige Strömung der Reinigungsflüssigkeit zu erzielen und damit eine wirkungsvolle Wärmeabfuhr. Die Strömungsumlenkelemente sind günstigerweise einstückig mit dem Innenmantel gebildete Rippen. Die Strömungsumlenkelemente verlaufen beispielsweise jeweils abwechselnd von einer ersten Wandung des Kühlkanals in Richtung einer gegenüberliegenden zweiten Wandung, ohne jedoch mit dieser verbunden zu sein, so dass die Reinigungsflüssigkeit schlangenlinienförmig im Kühlkanal strömen kann. Insbesondere verlaufen die Rippen axial, abwechselnd ausgehend von einer der vorstehend erwähnten axialen Begrenzungswandungen des Kühlkanals, und sind in Umfangsrichtung voneinander bevorzugt ungefähr gleichmäßig beabstandet.

Vorteilhafterweise ist das mindestens eine Abstandselement als radiale Rippe ausgebildet, d.h. als außenseitig am Motorgehäuse angeordnete Rippe, die sich bezüglich der Motorwelle in radialer Richtung vom Motorgehäuse weg erstreckt. In der Praxis zeigt sich, dass durch die mindestens eine Rippe unter konstruktiv einfacher Ausgestaltung eine robuste Bauform der Motorpumpeneinheit erzielt werden kann. Zugleich wird eine zuverlässige Wärmeabfuhr vom Motorgehäuse an den Kühlkanal ermöglicht.

Bevorzugt ist das mindestens eine Abstandselement sich in, bezüglich der Motorwelle, axialer Richtung erstreckend ausgebildet ist, d.h. es verläuft außenseitig am Motorgehäuse parallel zur Motorwelle. Dies ermöglicht eine konstruktiv einfache Herstellung des mindestens einen Abstandselementes, insbesondere in einem Druckguss- oder Strangpressverfahren. Günstigerweise erstreckt sich das mindestens eine Abstandselement über oder im Wesentlichen über die gesamte Länge des Motors, so dass der Motorpumpeneinheit eine robuste Bauform verliehen werden kann. Zudem wird die Wärmeabfuhr vom Motorgehäuse auf den Kühlkanal verbessert.

In der Praxis erweist es sich als vorteilhaft, wenn das mindestens eine Abstandselement sich in Richtung auf das Motorgehäuse und/oder in Richtung auf den Kühlkanal verbreiternd ausgebildet ist. Vom Zwischenraum aus betrachtet bildet das mindestens eine Abstandselement dem Motorgehäuse zugewandt gewissermaßen einen "Sockel" aus, um einen gezielten Wärmefluss in Richtung des Abstandselementes sicherzustellen. In entsprechender Weise kann sich das mindestens eine Abstandselement ausgehend vom Zwischenraum auf der Seite des Kühlkanals kapitellartig verbreitern, so dass die Wärme möglichst flächig an den Kühlkanal und insbesondere den Innenmantel abgegeben werden kann. In der Praxis erweist es sich als hinreichend für die Wärmeabfuhr, wenn ungefähr mittig zwischen dem Motorgehäuse und dem Kühlkanal eine Einschnürung in Form einer Querschnittsverengung des mindestens einen Abstandselementes vorhanden ist, um die Motorpumpeneinheit möglichst material- und gewichtssparend zu bauen.

Als besonders bevorzugt hat es sich erwiesen, wenn die Motorpumpeneinheit eine Mehrzahl von Abstandselementen umfasst. In der Praxis zeigt es sich, dass sich dadurch eine bessere Wärmeabfuhr unter dennoch konstruktiv einfacher Herstellung der Motorpumpeneinheit erzielen lässt.

Die Mehrzahl von Abstandselementen ist günstigerweise identisch oder im Wesentlichen identisch ausgestaltet.

Für eine robuste Bauform der Motorpumpeneinheit und eine gleichmäßige Wärmeabfuhr vom Motorgehäuse ist es von Vorteil, wenn die Abstandselemente in Umfangsrichtung des Motors gleichmäßig voneinander beabstandet sind, d.h. je zwei benachbarte Abstandselemente denselben Abstand voneinander aufweisen. Bei dieser Ausführungsform sind die Abstandselemente besonders bevorzugt als parallel zueinander, axial verlaufende und sich radial erstreckende Rippen ausgestaltet.

Bei einer vorteilhaften Umsetzung der Motorpumpeneinheit in der Praxis hat es sich als günstig erwiesen, wenn die Motorpumpeneinheit ungefähr 10 bis ungefähr 20, bevorzugt ungefähr 14 bis ungefähr 18 Abstandselemente umfasst, wobei sie insbesondere 16 Abstandselemente umfassen kann. Sind die Abstandselemente in Umfangsrichtung des Motors gleichmäßig voneinander beabstandet, weisen benachbarte Abstandselemente infolgedessen einen Winkelabstand von ungefähr 18° bis ungefähr 36°, bevorzugt von ungefähr 20° bis ungefähr 26° und insbesondere von ungefähr 22,5° auf. Dies erweist sich in der Praxis als gut geeignet für eine robuste Bauform der Motorpumpeneinheit sowie gleichzeitig eine effiziente Wärmeabfuhr an den Kühlkanal.

Die nachfolgende Beschreibung bevorzugter Ausführungsformen der Erfindung dient im Zusammenhang mit der Zeichnung der näheren Erläuterung der Erfindung. Es zeigen:
- Figur 1:: eine perspektivische Darstellung einer bevorzugten Ausführungsform eines erfindungsgemäßen Hochdruckreinigungsgerätes, umfassend eine in den Figuren 2 bis 4 dargestellte bevorzugte Motorpumpeneinheit;
- Figur 2:: eine perspektivische Darstellung der Motorpumpeneinheit des Hochdruckreinigungsgerätes aus Figur 1, teilweise geschnitten;
- Figur 3:: eine Längsseitenansicht der Motorpumpeneinheit aus Figur 2, teilweise geschnitten;
- Figur 4:: eine vereinfachte Querschnittsansicht der Motorpumpeneinheit längs der Linie 4-4 in Figur 3;
- Figur 5:: schematisch eine Draufsicht auf einen aufgeschnittenen und flachgelegten Mantel eines Kühlkanals der Motorpumpeneinheit aus Figur 2;
- Figur 6:: schematisch eine Querschnittsansicht entsprechend Figur 4 bei einer Variante der Motorpumpeneinheit aus Figur 2;
- Figur 7:: schematisch eine Draufsicht auf einen aufgeschnittenen und flachgelegten Mantel eines Kühlkanals einer weiteren Variante der Motorpumpeneinheit aus Figur 2 und
- Figur 8:: eine vereinfachte Querschnittsansicht (teilweise dargestellt) einer weiteren Variante einer Motorpumpeneinheit.

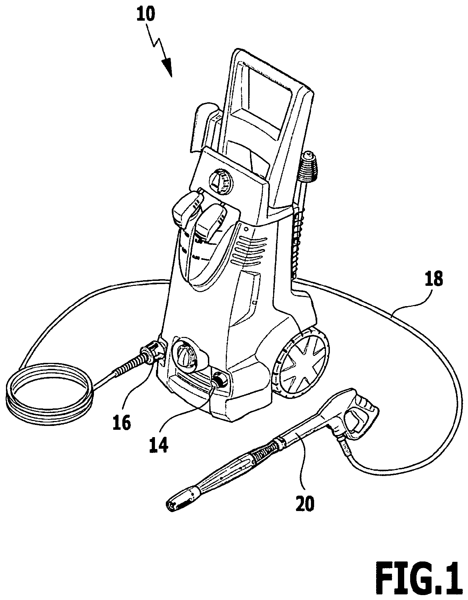

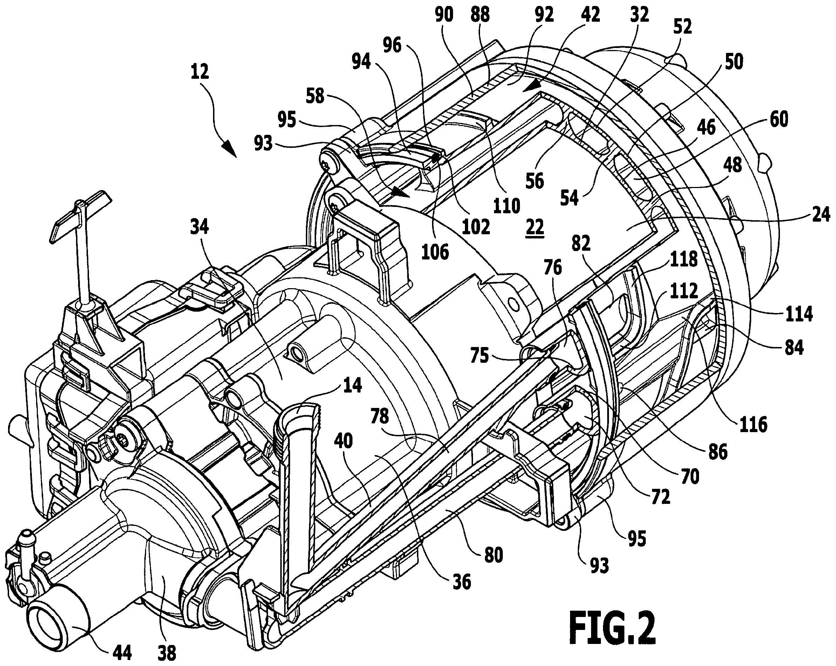

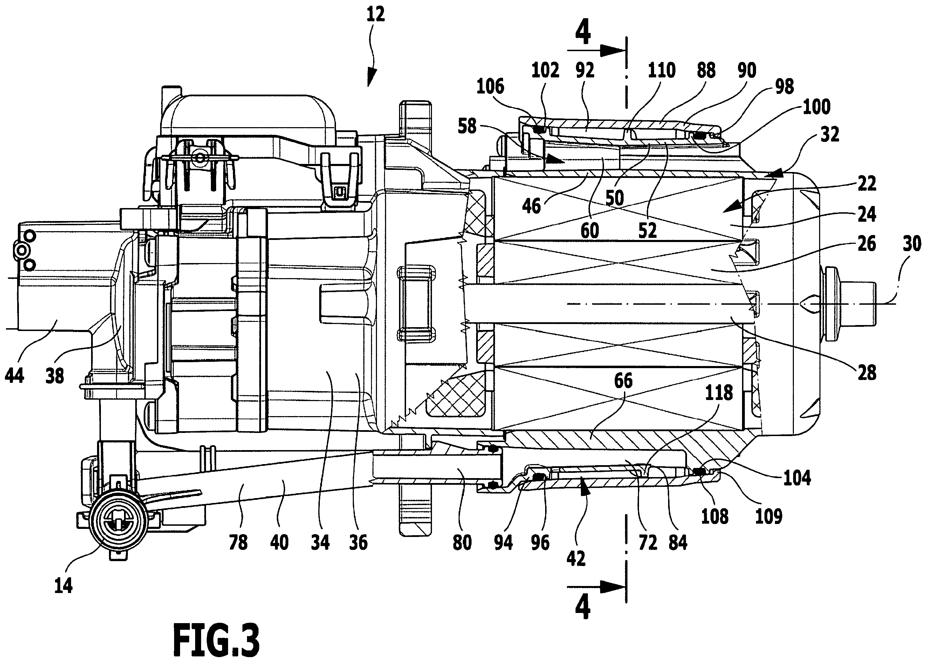

Figur 1 zeigt in perspektivischer Darstellung eine bevorzugte Ausführungsform eines insgesamt mit dem Bezugszeichen 10 belegten Hochdruckreinigungsgerätes. Das Hochdruckreinigungsgerät 10 weist eine in den Figuren 2 bis 4 dargestellte und insgesamt mit dem Bezugszeichen 12 belegte bevorzugte Motorpumpeneinheit auf.

Über einen Anschluss 14 kann ein in der Zeichnung nicht dargestellter, an ein Wasserversorgungsnetz anschließbarer Versorgungsschlauch an das Hochdruckreinigungsgerät 10 angeschlossen werden, um diesem eine Reinigungsflüssigkeit wie insbesondere Wasser zuzuführen. Die Reinigungsflüssigkeit kann unter Einsatz der Motorpumpeneinheit 12 unter Druck gesetzt werden und vom Hochdruckreinigungsgerät 10 über einen an einen weiteren Anschluss 16 angeschlossenen Hochdruckschlauch 18 abgegeben werden. An den Hochdruckschlauch 18 ist eine Sprühlanze 20 angeschlossen, um die unter Druck gesetzte Reinigungsflüssigkeit zu versprühen.

Die Motorpumpeneinheit 12 umfasst einen Motor 22, der als Elektromotor ausgestaltet und in der Zeichnung nur schematisch dargestellt ist. Der Motor 22 ist an sich bekannt und umfasst einen ringförmigen Stator 24, der einen Rotor 26 mit Motorwelle 28 umgibt. Die Motorwelle 28 definiert eine Motorachse 30.

Der Motor 22 ist in einem koaxial zur Motorachse 30 ausgerichteten Motorgehäuse 32 aufgenommen, an das stirnseitig ein Pumpaggregat 34 der Motorpumpeneinheit 12 angeflanscht ist. Das Pumpaggregat 34 ist eine an sich bekannte, von der Motorwelle 28 angetriebene Axialkolbenpumpe mit am Motorgehäuse 32 angeflanschten Pumpenblock 36. Auf der dem Motor 22 abgewandten Seite weist das Pumpaggregat 34 einen Pumpenkopf 38 auf.

An den Pumpenkopf 38 ist saugseitig eine Saugleitung 40 angeschlossen, die endseitig den Anschluss 14 für den Versorgungsschlauch aufweist. Unter anderem umfasst die Saugleitung 40 einen Kühlkanal 42, der das Motorgehäuse 32 umgibt und auf den nachfolgend noch im Einzelnen eingegangen wird. Durch die Saugleitung 40 hindurch kann die unter Druck zu setzende Reinigungsflüssigkeit in den Pumpenkopf 38 eingesaugt, darin unter Druck gesetzt und durch einen mit dem Anschluss 16 in Strömungsverbindung stehenden Druckauslass 44 vom Pumpaggregat 34 abgegeben werden (nicht dargestellt).

Das Motorgehäuse 32 weist als wesentliches Bauteil zur Kapselung und zum Schutz des Motors 22 einen diesen in Umfangsrichtung der Motorachse 30 umgebenden Gehäusemantel 46 auf, der sich im Wesentlichen über die gesamte Länge des Motors 22 erstreckt. In radialer Richtung, bezogen auf die Motorachse 30, stehen vom Gehäusemantel 46 eine Vielzahl von Abstandselementen 48 ab, die den Kühlkanal 42 in Abstand zum Gehäusemantel 46 bringen. Der Kühlkanal 42 wird durch die Abstandselemente 48 relativ zum Gehäusemantel 46 gewissermaßen "aufgebockt". Zu diesem Zweck greifen die Abstandselemente 48 an einer dem Motorgehäuse 32 zugewandten Innenwandung 50 des Kühlkanals 42 an.

Die Wandung 50 ist ebenfalls mantelförmig ausgestaltet und bezüglich der Motorachse 30 koaxial zum Gehäusemantel 46 ausgerichtet, so dass sie einen den Gehäusemantel 46 ringförmig umgebenden Innenmantel 52 des Kühlkanals 42 ausbildet. Auf diese Weise bilden die Abstandselemente 48 Stege 54, welche Gehäusemantel 46 und Innenmantel 52 in radialer Richtung miteinander verbinden.

Die Stege 54 sind jeweils ausgestaltet als außenseitig am Gehäusemantel 46 in axialer Richtung verlaufende und vom Gehäusemantel 46 in radialer Richtung vorspringende Rippen 56. In Umfangsrichtung der Motorachse 30 sind sie gleichmäßig voneinander beabstandet. Zwischen zwei benachbarten Rippen 56 ist daher jeweils ein gleicher Winkelabstand gegeben. Weil insgesamt 16 Rippen 56 vorgesehen sind, beträgt der Winkelabstand benachbarter Rippen 56 22,5°.

Die Rippen 56 teilen den ansonsten ringförmigen Zwischenraum 58 zwischen dem Gehäusemantel 46 und dem Innenmantel 52 in eine Anzahl von sechzehn Zwischenraumbereichen, wobei zwischen je zwei Rippen 56 ein Zwischenraumbereich 60 gebildet ist. Lediglich nahe dem Anschluss des Pumpaggregates 34 an das Motorgehäuse 32 gehen einige Zwischenraumbereiche 60 ineinander über, wobei sich die sie begrenzenden Rippen 56 nicht ganz bis zum Pumpaggregat 34 erstrecken (Figur 2). Der Zwischenraum 58 und damit auch die Zwischenraumbereiche 60 sind gasgefüllt, insbesondere mit Luft gefüllt.

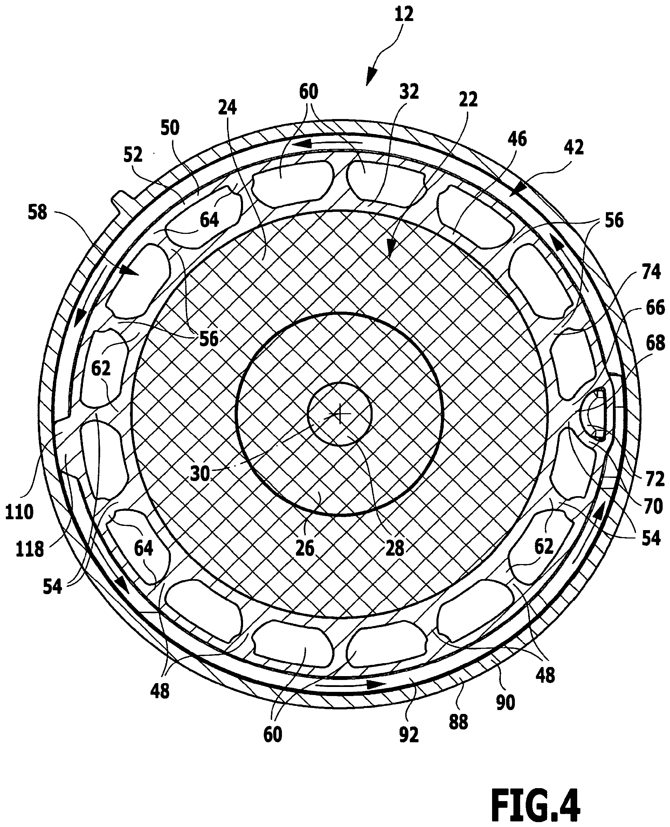

In einem senkrecht zur Motorachse 30 verlaufenden Querschnitt weisen die Rippen 56 eine ungefähr hantelförmige Gestalt auf. In Richtung des Gehäusemantels 46 und in Richtung des Innenmantels 52 verbreitern sich die Rippen 56 jeweils an einem Sockelbereich 62 bzw. einem Kapitellbereich 64 (Figur 4). Etwa mittig zwischen dem Gehäusemantel 46 und dem Innenmantel 52 ist der Querschnitt der Rippen 56 jeweils am Geringsten.

Vorstehend erläuterte Merkmale der Rippen 56 gelten mit Ausnahme einer in Figur 4 ganz rechts dargestellten Rippe 66. Die Rippe 66 geht etwa mittig zwischen dem Gehäusemantel 46 und dem Innenmantel 52 an einer Verzweigung 68 über in eine Wandung 70 einer Abgabeleitung 72 für Reinigungsflüssigkeit aus dem Kühlkanal 42. Die Abgabeleitung 72 ist somit radial unmittelbar innerhalb des Innenmantels 52 an diesen angeformt, wobei der Innenmantel 52 eine Außenwand der Abgabeleitung 72 bildet.

Ferner gelten vorstehend erläuterte Merkmale der Rippen 56 nur eingeschränkt für eine in Figur 4 der Rippe 66 unmittelbar oberhalb benachbarte Rippe 74. Die Rippe 74 geht an einer in der Zeichnung nicht dargestellten Verzweigung in eine Wandung 75 einer Zuführleitung 76 für Reinigungsflüssigkeit in den Kühlkanal 42 über. Die Zuführleitung 76 ist in Figur 4 aufgrund der axialen Lage des Schnittes nicht zu sehen, sie ist allerdings in Figur 2 dargestellt. Somit verläuft auch die Zuführleitung 76 radial unmittelbar innerhalb des Innenmantels 52, der eine Außenwand der Zuführleitung 76 bildet.

Die Abgabeleitung 72 und die Zuführleitung 76 treten beide auf der dem Pumpaggregat 34 zugewandten Seite aus dem Zwischenraum 58 aus. Endseitig ist an die Zuführleitung 76 eine L-förmige Zulaufleitung 78 der Saugleitung 40 angeschlossen, die an ihrem freien Ende den Anschluss 14 für den Versorgungsschlauch aufweist. An die Abgabeleitung 72 ist endseitig eine Verbindungsleitung 80 der Saugleitung 40 angeschlossen, die die Abgabeleitung 72 mit der Saugseite des Pumpenkopfes 38 verbindet.

Über eine im Innenmantel 52 gebildete Einlassöffnung 82 mündet die Zuführleitung 76 in den Kühlkanal 42. In entsprechender Weise mündet die Abgabeleitung 72 über eine im Innenmantel 52 gebildete Auslassöffnung 84 in den Kühlkanal 42. Die Einlassöffnung 82 und die Auslassöffnung 84 sind in axialer Richtung der Motorachse 30 voneinander beabstandet, wobei die Einlassöffnung 82 dem Pumpaggregat 34 näher gelegen ist als die Auslassöffnung 84. In Umfangsrichtung der Motorachse 30 sind die Einlassöffnung 82 und die Auslassöffnung 84 ebenfalls voneinander beabstandet. Ihr Winkelabstand beträgt ungefähr den Winkelabstand der Rippe 66 und der Rippe 74 voneinander, die in die Wandungen 70 bzw. 75 der Abgabeleitung 72 und der Zuführleitung 76 übergehen.

Die Abgabeleitung 72 mündet ferner über eine in Figur 2 ansatzweise zu sehende Entleerungsöffnung 86 in den Kühlkanal 42. Der Querschnitt der Entleerungsöffnung 86 ist wesentlich geringer als der Querschnitt der Auslassöffnung 84 und beträgt beispielsweise ungefähr ein Zehntel bis ein Fünfzigstel davon, insbesondere ein Zwanzigstel bis ein Dreißigstel davon. Im Normalbetrieb der Motorpumpeneinheit 12 tritt durch die Entleerungsöffnung 86 nahezu keine Reinigungsflüssigkeit aus dem Kühlkanal 42 in die Abgabeleitung 72 aus. Dies ist auf die Strömungsgeschwindigkeit der Reinigungsflüssigkeit in Kombination mit der vergleichsweise geringen Querschnittsfläche der Entleerungsöffnung 86 im Verhältnis zur Querschnittsfläche der Auslassöffnung 84 zurückzuführen.

Demgegenüber ist die Entleerungsöffnung 86 von Nutzen, wenn die Motorpumpeneinheit 12 etwa bei Außerbetriebnahme im Winter von Reinigungsflüssigkeit im Kühlkanal 42 entleert werden soll. Zu diesem Zweck ist es üblich, die Motorpumpeneinheit 12 für kurze Zeit ohne Anschluss eines Versorgungsschlauches an den Anschluss 14 zu betätigen, so dass Reinigungsflüssigkeit aus dem Kühlkanal 42 abgesaugt werden kann. In diesem Fall, in dem die Reinigungsflüssigkeit im Kühlkanal 42 im Wesentlichen ruht, ist die Querschnittsfläche der Entleerungsöffnung 86 hinreichend groß bemessen, dass durch sie hindurch der Kühlkanal 42 von Reinigungsflüssigkeit befreit werden kann. Dies ist insbesondere dann gut durchführbar, wenn, wie im Falle des Hochdruckreinigungsgerätes 10, die Entleerungsöffnung 86 auf der dem Pumpaggregate 34 zugewandten Seite des Innenmantels 52 angeordnet ist, d.h. beim Hochdruckreinigungsgerät 10 auf einer dessen Unterseite zugewandten Seite, bezogen auf die in Figur 1 gezeigte Gebrauchsstellung. Dadurch kann durch die Entleerungsöffnung 86 selbst dann noch Reinigungsflüssigkeit aus dem Kühlkanal 42 abgesaugt werden, wenn der Flüssigkeitspegel im Kühlkanal 42 unter den Rand der Auslassöffnung 84 gefallen ist. In der Praxis lässt sich dadurch eine Entleerung des Kühlkanals 42 von Reinigungsflüssigkeit zu ungefähr 90 % erzielen. Dies ist ausreichend, um die Motorpumpeneinheit 12 vor Schäden durch gefrierende Reinigungsflüssigkeit im Kühlkanal 42 zu bewahren.

Über die Wandung 50 in Gestalt des Innenmantels 52 hinaus umfasst der Kühlkanal 42 außenseitig eine Wandung 88 in Gestalt eines Außenmantels 90. Der Außenmantel 90 umgibt den Innenmantel 52 ringförmig und in Abstand zu diesem, so dass zwischen dem Außenmantel 90 und dem Innenmantel 52 ein Ringspalt 92 gebildet ist. Relativ zum Innenmantel 52 und zum Gehäusemantel 46 ist der Außenmantel 90 koaxial ausgerichtet, und in axialer Richtung erstreckt er sich über etwas weniger als die Länge des Motors 22.

Der Außenmantel 90 ist mittels Verbindungselementen in Form von Schrauben an den Rippen 56 festgelegt. Zu diesem Zweck weisen vier Rippen 56 endseitig auf ihrer dem Pumpaggregat 34 zugewandten Seite radiale Vorsprünge zur Aufnahme der Schrauben auf (nur zwei Vorsprünge 93 in Figur 2 gezeigt). Die Schrauben wirken mit Verbindungselementen außenseitig am Außenmantel 90 in Gestalt von Schraubdomen 95 zusammen (zwei in Figur 2 gezeigt).

In axialer Richtung wird der Kühlkanal 42 auf seiner dem Pumpaggregat 34 zugewandten Seite durch eine zwischen dem Innenmantel 52 und dem Außenmantel 90 angeordnete umlaufende Wandung 94 in Gestalt einer Rippe 96 begrenzt. In axialem Abstand dazu begrenzt eine zwischen dem Innenmantel 52 und dem Außenmantel 90 angeordnete umlaufende Wandung 98 in Gestalt einer weiteren Rippe 100 den Kühlkanal 42 auf seiner dem Pumpaggregat 34 abgewandten Seite. In den Rippen 96 und 100 sind jeweils Ringnuten 102 bzw. 104 ausgespart zur Aufnahme von ringförmigen Dichtelementen 106 bzw. 108. Die Dichtelemente 106 und 108 dichten den Außenmantel 90 gegenüber dem Innenmantel 52 ab. Mittels eines kragenförmigen Gegenanschlags 109 kann sich der Außenmantel 90 beispielsweise an der Rippe 100 abstützen, wenn er an den Vorsprüngen 93 fixiert ist.

Die Rippen 96 und 100 sind einstückig mit dem Innenmantel 52 gebildet, der außerdem einstückig mit den Rippen 56 und dem Gehäusemantel 46 gebildet ist. Auch die Wandungen 50 bzw. 75 der Abgabeleitung 72 und der Zuführleitung 76 sind integral mit dem Innenmantel 52, den Rippen 56, dem Gehäusemantel 46 und den Rippen 96, 100 gebildet. Die Herstellung erfolgt durch Druckgießen, insbesondere aus Aluminium oder einer Aluminiumlegierung. Die einstückige Herstellung der vorstehend genannten Baueile ermöglicht eine konstruktiv einfache und zugleich kostengünstige Fertigung der Motorpumpeneinheit 12. Auch eine Fertigung des Gehäusemantels 46, der Rippe 56 und des Innenmantels 52 mittels Strangpressen, etwa aus Aluminium oder einer Aluminiumlegierung, ist denkbar.

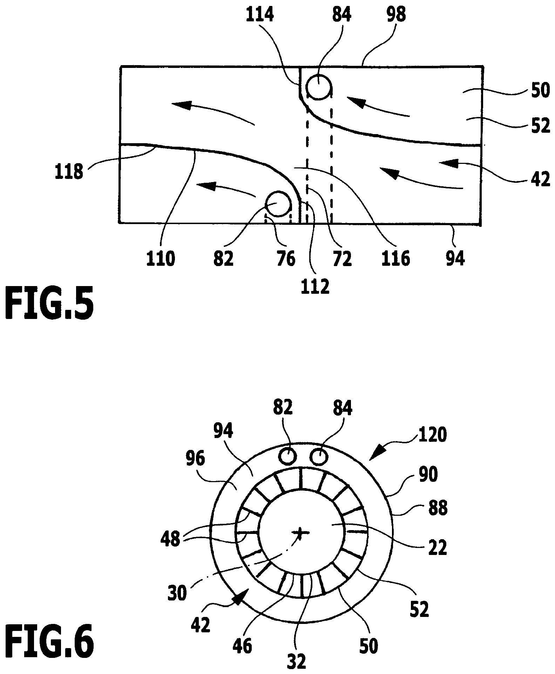

Ferner ist mit dem Innenmantel 52 eine diesen außenseitig umlaufende Rippe 110 einstückig ausgebildet. Wie insbesondere aus den Figuren 2 und 5 hervorgeht, erstreckt sich die Rippe 110 ausgehend von der umlaufenden Rippe 96 mit einem axialen Abschnitt 112 zunächst in axialer Richtung, wobei sie die Einlassöffnung 82 passiert. Anschließend läuft die Rippe 110 schraubenförmig mit einem Umlauf um die Motorachse 30 um den Innenmantel 52 herum. Dabei passiert sie die Auslassöffnung 84, um erneut in einen axialen Abschnitt 114 überzugehen, der an der Rippe 100 endet. Ein Zwischenraum 116 ist zwischen den axialen Abschnitten 112 und 114 gebildet, die ungefähr in Verlängerung voneinander verlaufen.

Die Einlassöffnung 82 und die Auslassöffnung 84 liegen auf einander abgewandten Seiten der Rippe 110, bezogen auf die Strömungsrichtung von Reinigungsflüssigkeit im Kühlkanal 42. Dadurch bildet die Rippe 110 eine Scheidewand 118 zur Führung der Reinigungsflüssigkeitsströmung im Kühlkanal 42. Wie in Figur 5 schematisch durch Pfeile symbolisiert ist, tritt die Reinigungsflüssigkeit durch die Einlassöffnung 82 in den Ringspalt 92 ein und läuft linksseitig der Rippe 110 einmal um den Innenmantel 52 herum, durch den Zwischenraum 116 hindurch, und anschließend rechtsseitig der Rippe 110 erneut einmal um den Innenmantel 52 herum, um den Kühlkanal 42 durch die Auslassöffnung 84 hindurch zu verlassen.

Mit der Motorpumpeneinheit 12 und damit auch mit dem erfindungsgemäßen Hochdruckreinigungsgerät 10 ergeben sich folgende Vorteile:
Wie erläutert, ist der Kühlkanal 42 relativ zum Motorgehäuse 32 durch die Rippen 56 beabstandet, die den Zwischenraum 58 zwischen Gehäusemantel 46 und Innenmantel 52 überbrücken. Für den Fall, dass der Innenmantel 52 eine Undichtigkeit aufweist, kann die Reinigungsflüssigkeit in den Zwischenraum 58 eindringen. Eine Undichtigkeit des Innenmantels 52 kann sich möglicherweise durch Korrosion aufgrund der zuweilen aggressiven Reinigungsflüssigkeit ergeben, etwa indem dem am Anschluss 14 eintretenden Wasser eine Reinigungschemikalie zugesetzt ist. Der Zwischenraum 58 wirkt als Sicherheitsraum für die aus dem Kühlkanal 42 austretende Reinigungsflüssigkeit, die sich in diesem sammeln kann, ohne jedoch in das Innere des Motorgehäuses 32 einzudringen. Denn der Motor 22 ist selbst im Falle eines undichten korrodierten Kühlkanals 42 noch durch den Gehäusemantel 46 abgeschottet.

Selbst im Falle einer Leckage des Kühlkanals 42 ist somit der Motor 22 vor der Reinigungsflüssigkeit geschützt, so dass die Motorpumpeneinheit 12 gegenüber den herkömmlichen Motorpumpeneinheiten eine erhöhte elektrische Sicherheit aufweist. Da der Zwischenraum 58 mit Luft von hoher Kompressibilität gefüllt ist, kann eine große Menge an Reinigungsflüssigkeit in den Zwischenraum 58 eintreten. Selbst im Falle großer Lecks des Kühlkanals 42 wird dadurch die elektrische Sicherheit der Motorpumpeneinheit 12 gewährleistet.

Dennoch kann die Abwärme des Motors 22 effizient an die Reinigungsflüssigkeit im Kühlkanal 42 abgeführt werden. Förderlich hierfür ist zum Einen die Ausgestaltung des Gehäusemantels 46, der Rippen 56 und des Innenmantels 52 einstückig aus Aluminium oder einer Aluminiumlegierung mit hoher thermischer Leitfähigkeit. Die Abwärme des Motors 22 kann wirkungsvoll vom Gehäusemantel 46 aufgenommen werden und über die Rippen 56 an den Innenmantel 52 abgegeben werden. Die Ausgestaltung der Rippen 56 mit Sockelbereich 62 und Kapitellbereich 64 ermöglicht es zum Anderen, dass die Abwärme gezielt durch die Rippen 56 hindurch vom Gehäusemantel 46 dem Innenmantel 52 zugeleitet wird.

Durch die große Mantelfläche des Innenmantels 52 besteht ein guter Wärmekontakt zur Reinigungsflüssigkeit im Kühlkanal 42, so dass die Reinigungsflüssigkeit die Wärme zuverlässig abführen kann. Förderlich hierfür ist weiter, dass die Reinigungsflüssigkeit nach dem Eintreten in den Kühlkanal 42 durch die Einlassöffnung 82 hindurch zweimal den Innenmantel 52 umströmt, bevor sie durch die Auslassöffnung 84 aus dem Kühlkanal 42 austritt.

Weiter ist für die Wärmeabfuhr vom Gehäusemantel 46 von Vorteil, dass im Zwischenraum 58 ein Gas und insbesondere Luft mit nur geringer thermischer Leitfähigkeit aufgenommen ist. Da die thermische Leitfähigkeit der aus Aluminium oder aus einer Aluminiumlegierung gefertigten Rippen 56 sehr viel größer ist als diejenige der Luft im Zwischenraum 58, wird die Wärme gezielt an den Innenmantel 52 abgegeben.

Außerdem ist bei der Motorpumpeneinheit 12 von Vorteil, dass die Abgabeleitung 72 und die Zuführleitung 76 ebenfalls im Zwischenraum 58 angeordnet sind und damit auf der dem Außenmantel 90 abgewandten Seite des Innenmantels 52. Dadurch kann eine sehr kompakte Bauform der Motorpumpeneinheit 12 erzielt werden. Weil die Wandungen 50 bzw. 75 der Abgabeleitung 72 und der Zuführleitung 76 ebenfalls einstückig mit dem Innenmantel 52 gebildet sind, wird die Herstellung der Motorpumpeneinheit 12 weiter vereinfacht.

Nachfolgend wird auf in den Figuren 6 bis 8 dargestellte Varianten der Motorpumpeneinheit 12 und deren Merkmale eingegangen, bei denen gleiche und gleichwirkende Merkmale oder Bauteile zu denjenigen der Motorpumpeneinheit 12 mit denselben Bezugszeichen belegt sind.

Eine Variante der Motorpumpeneinheit 12, die in Figur 6 schematisch in einer der Figur 4 entsprechenden Weise dargestellt und mit dem Bezugszeichen 120 belegt ist, unterscheidet sich von der Motorpumpeneinheit 12 dadurch, dass die Rippe 96 von größerem radialen Ausmaß ist als im Falle der Motorpumpeneinheit 12. Dies ermöglicht es, die Einlassöffnung 82 und die Auslassöffnung 84 in der Rippe 96 auszubilden, so dass die Zulaufleitung 78 und die Verbindungsleitung 80 unmittelbar axial an den Kühlkanal 42 angeschlossen werden können. Im Übrigen ist die Motorpumpeneinheit 120 identisch zur Motorpumpeneinheit 12 ausgestaltet, und die mit dieser erzielbaren Vorteile sind mit der Motorpumpeneinheit 120 ebenfalls erzielbar, so dass diesbezüglich auf die vorstehenden Erläuterungen verwiesen wird.

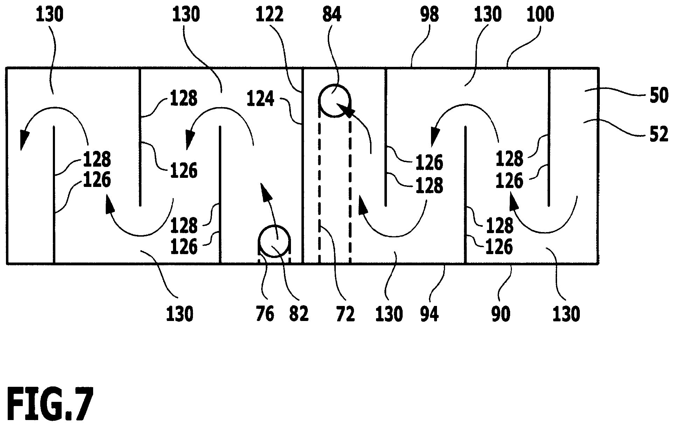

Von einer weiteren Motorpumpeneinheit ist in Figur 7 lediglich der Innenmantel 52 in einer der Figur 5 entsprechenden Weise dargestellt. Bei dieser Variante der Motorpumpeneinheit 12 ist anstelle der Scheidewand 118 eine andersartige Scheidewand 122 vorhanden, die in axialer Richtung von der dem Pumpaggregat 34 zugewandten Rippe 96 bis zu der dem Pumpaggregat 34 abgewandten Rippe 100, die den Kühlkanal 42 jeweils axial begrenzen, verläuft. Die Scheidewand 122 ist beispielsweise als einstückig mit dem Innenmantel 52 gebildete Rippe 124 ausgestaltet. Ferner ist die Scheidewand 122 zwischen der Einlassöffnung 82 und der Auslassöffnung 84 angeordnet, so dass diese, bezogen auf die Strömungsrichtung von Reinigungsflüssigkeit im Kühlkanal 42, auf einander gegenüberliegenden Seiten der Scheidewand 122 liegen.

Weiter sind außenseitig am Innenmantel 52 eine Mehrzahl von Strömungsumlenkelementen 126 angeordnet, die beispielsweise als einstückig mit den Innenmantel 52 ausgebildete Rippen 128 ausgestaltet sind. Insgesamt sind sechs Rippen 128 vorhanden, die, einschließlich der Scheidewand 122, in Umfangsrichtung des Innenmantels 52 gleichmäßig über dessen Außenseite verteilt sind.

Die Rippen 128 gehen abwechselnd jeweils von der Wandung 94 in Richtung der Wandung 98 sowie von der Wandung 98 in Richtung der Wandung 94 aus, ohne jedoch mit der jeweils anderen Wandung verbunden zu sein. Auf diese Weise ist zwischen der jeweiligen Rippe 128 und der jeweiligen Wandung 94 oder 98 ein axialer Zwischenraum 130 gebildet. Dadurch erhält der Innenmantel 52 außenseitig durch die Rippen 128 eine Art mäanderförmige Struktur. Dies hat zur Folge, dass die durch die Einlassöffnung 82 in den Kühlkanal 42 eintretende Reinigungsflüssigkeit, wie in Figur 7 durch Pfeile symbolisiert, schlangenlinienförmig an den Rippen 128 vorbei und durch die Zwischenräume 130 hindurch in Richtung der Auslassöffnung 84 strömt. Durch die infolgedessen gesteigerte Verweildauer der Reinigungsflüssigkeit im Kühlkanal 42 kann die Abwärme des Motors 22 besonders wirkungsvoll abgeführt werden.

Im übrigen ist die den in Figur 7 dargestellten Innenmantel 52 aufweisende Variante der Motorpumpeneinheit 12 identisch zu dieser ausgestaltet, und die mit der Motorpumpeneinheit 12 erzielbaren Vorteile sind bei dieser Variante ebenfalls erzielbar, so dass diesbezüglich auf die vorstehenden Erläuterungen verwiesen wird. Auch die Motorpumpeneinheit 120 könnte den Innenmantel 52 gemäß der in Figur 7 dargestellten Ausgestaltung umfassen.

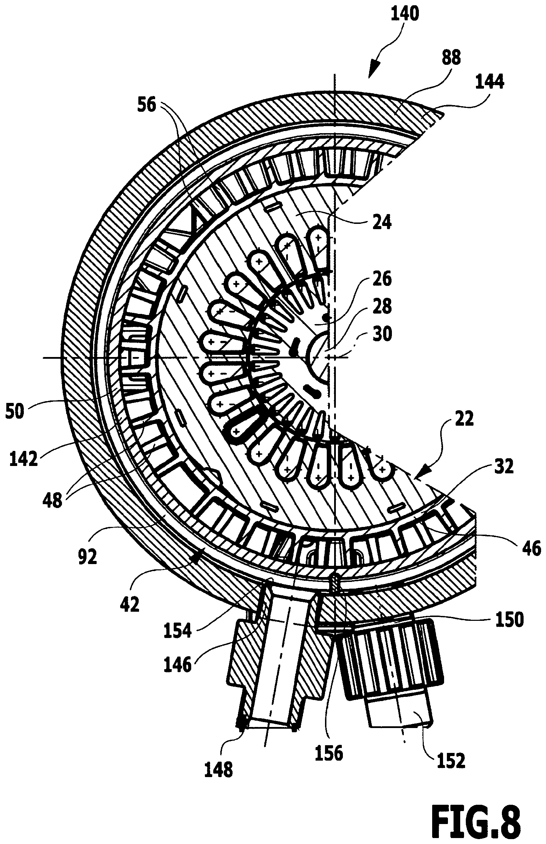

Eine weitere Variante der Motorpumpeneinheit 12 ist in Figur 8 in einer der Figur 4 entsprechenden Weise teilweise dargestellt und dort mit dem Bezugszeichen 140 belegt. Von der Motorpumpeneinheit 12 unterscheidet sich die Motorpumpeneinheit 140 im wesentlichen dadurch, dass anstelle des Innenmantels 52 ein die Wandung 50 bildender andersartiger Innenmantel 142 des Kühlkanals 42 zum Einsatz kommt.

Der Innenmantel 142 ist zylindrisch ausgestaltet und koaxial zum Gehäusemantel 46 ausgerichtet. Im Gegensatz zum Innenmantel 52 ist er nicht einstückig mit den Rippen 56 gebildet, sondern stattdessen auf diese aufgschrumpft. Der Innenmantel 142 ist beispielsweise aus Aluminium oder einer Aluminiumlegierung gefertigt, so dass auch im Fall der Motorpumpeneinheit 140 eine besonders wirkungsvolle Abfuhr der Abwärme des Motors 22 an die Reinigungsflüssigkeit im Kühlkanal 42 erfolgen kann. Das Aufschrumpfen des Innenmantels 142 ermöglicht eine robuste und zugleich herstellungstechnisch einfache Fertigung der Motorpumpeneinheit 140.

Die den Innenmantel 142 außenseitig koaxial umgebende Wandung 88 ist bei der Motorpumpeneinheit durch einen Außenmantel 144 gebildet. In den Außenmantel 144 sind Anschlüsse 146 für eine Zuführleitung 148 sowie 150 für eine Abgabeleitung 152 integriert. Die Zuführleitung 148 und die Abgabeleitung 152 sind in Figur 8 nur ansatzweise dargestellt. Durch die Zuführleitung 148 und den Anschluss 146 mit einer Einlassöffnung 154 hindurch kann Reinigungsflüssigkeit in den Ringspalt 92 einströmen, und durch den Anschluss 150 mit einer nicht dargestellten Auslassöffnung und die Abgabeleitung 152 hindurch kann Reinigungsflüssigkeit aus dem Ringspalt 92 abfließen. Die Anschlüsse 146 und 150 stehen bezüglich der Motorachse 30 radial nach außen vom Außenmantel 144 ab.

Ferner ist zwischen der Einlassöffnung 154 und der nicht dargestellten Auslassöffnung auch bei der Motorpumpeneinheit 140 eine rippenförmige, axial verlaufende Scheidewand 156 außenseitig am Innenmantel 142 angeordnet, so dass die Reinigungsflüssigkeit nicht auf direktem Wege von der Einlassöffnung 154 zur Auslassöffnung strömen kann.

Im übrigen kann die Motorpumpeneinheit 140 identisch zur Motorpumpeneinheit 12 ausgestaltet sein, und die mit dieser erzielbaren Vorteile sind mit der Motorpumpeneinheit 140 ebenfalls erzielbar, so dass auf die vorstehenden Erläuterungen verwiesen wird. Außerdem kann vorgesehen sein, dass der Innenmantel 142 wie der Innenmantel 52 gemäß Figur 7 die Rippen 128 umfasst, so dass die Reinigungsflüssigkeit schlangenlinienförmig durch den Kühlkanal 42 strömen kann.

## Patentansprüche

1. Hochdruckreinigungsgerät (10) umfassend mindestens eine Motorpumpeneinheit (10; 120; 140) mit einem Motor (22) und einem Pumpaggregat (34), eine saugseitig an das Pumpaggregat (34) angeschlossene Saugleitung (40), die einen Anschluss (14) zum Anschließen eines Versorgungsschlauches aufweist, um dem Hochdruckreinigungsgerät (10) eine Reinigungsflüssigkeit zuzuführen, wobei die Reinigungsflüssigkeit unter Einsatz der Motorpumpeneinheit (10; 120; 140) unter Druck setzbar und über einen Anschluss (16) zum Anschließen eines Hochdruckschlauches (18) vom Hochdruckreinigungsgerät (10) abgebbar ist, wobei der Anschluss (16) mit einem Druckauslass des Pumpaggregates (34) in Strömungsverbindung steht, wobei die Motorpumpeneinheit (10; 120; 140) ein den Motor (22) umgebendes Motorgehäuse (32) umfasst und einen den Motor (22) umgebenden und von der Reinigungsflüssigkeit zur Wärmeabfuhr durchströmbaren Kühlkanal (42) als Bestandteil der Saugleitung (40) umfasst, um die vom Pumpaggregat (34) geförderte Reinigungsflüssigkeit zum Kühlen des Motors (22) einzusetzen, wobei der Kühlkanal (42) das Motorgehäuse (32) umgibt, **dadurch gekennzeichnet, dass** die Motorpumpeneinheit (12; 120; 140) mindestens ein wärmeleitfähiges Abstandselement (48) umfasst, über das der Kühlkanal (42) relativ zum Motorgehäuse (32) beabstandet ist.

2. Hochdruckreinigungsgerät nach Anspruch 1, **dadurch gekennzeichnet, dass** der zwischen dem Motorgehäuse (32) und dem Kühlkanal (42) gebildete, vom mindestens einen Abstandselement (48) überbrückte Zwischenraum (58) gasgefüllt ist.

3. Hochdruckreinigungsgerät nach Anspruch 1 oder 2, **dadurch gekennzeichnet, dass** das mindestens eine Abstandselement (48) einstückig mit dem Motorgehäuse (32) ausgebildet ist und/oder dass das mindestens eine Abstandselement (48) einstückig mit einer dem Motorgehäuse (32) zugewandten Innenwandung (50) des Kühlkanals (42) ausgebildet ist.

4. Hochdruckreinigungsgerät nach Anspruch 3, **dadurch gekennzeichnet, dass** das mindestens eine Abstandselement (48) mit dem Motorgehäuse (32) und/oder dass das mindestens eine Abstandselement (48) mit der Innenwandung (50) des Kühlkanals (42) aus Aluminium oder einer Aluminiumlegierung gefertigt ist.

5. Hochdruckreinigungsgerät nach Anspruch 3 oder 4, **dadurch gekennzeichnet, dass** das mindestens eine Abstandselement (48) mit dem Motorgehäuse (32) und/oder dass das mindestens eine Abstandselement (48) mit der Innenwandung (50) des Kühlkanals (42) als Druckgussteil oder als Strangpressteil gefertigt ist.

6. Hochdruckreinigungsgerät nach einem der voranstehenden Ansprüche, **dadurch gekennzeichnet, dass** eine dem Motorgehäuse (32) zugewandte Innenwandung (50) des Kühlkanals (42) auf das mindestens eine Abstandselement (48) aufgeschrumpft ist.

7. Hochdruckreinigungsgerät nach einem der voranstehenden Ansprüche, **dadurch gekennzeichnet, dass** eine dem Motorgehäuse (32) zugewandte Innenwandung (50) des Kühlkanals (42) als dieses umgebender Innenmantel (52; 142) ausgestaltet ist, der außenseitig von der Reinigungsflüssigkeit umströmt wird.

8. Hochdruckreinigungsgerät nach Anspruch 7, **dadurch gekennzeichnet, dass** der Kühlkanal (42) auf der dem Motorgehäuse (32) abgewandten Seite eine den Innenmantel (52; 142) umgebende Außenwandung (88) in Gestalt eines Außenmantels (90; 144) umfasst.

9. Hochdruckreinigungsgerät nach Anspruch 7 oder 8, **dadurch gekennzeichnet, dass** zwei axial voneinander beabstandete, außenseitig am Innenmantel (52; 142) angeordnete Wandungen (94, 98) den Kühlkanal (42) in axialer Richtung begrenzen.

10. Hochdruckreinigungsgerät nach einem der Ansprüche 7 bis 9, **dadurch gekennzeichnet, dass** in einer Wandung (50; 88; 94) des Kühlkanals (42) eine Einlassöffnung (82; 156) für die Reinigungsflüssigkeit und eine Auslassöffnung (84) für die Reinigungsflüssigkeit gebildet ist.

11. Hochdruckreinigungsgerät nach Anspruch 10, **dadurch gekennzeichnet, dass** die Einlassöffnung (82) und/oder die Auslassöffnung (84) für die Reinigungsflüssigkeit im Innenmantel (52) gebildet ist bzw. sind.

12. Hochdruckreinigungsgerät nach Anspruch 10 oder 11, **dadurch gekennzeichnet, dass** im Zwischenraum (58) zwischen dem Innenmantel (52) und dem Motorgehäuse (32) eine Zuführleitung (76) angeordnet ist, die über die Einlassöffnung (82) in den Kühlkanal (42) mündet, und/oder dass im Zwischenraum (58) zwischen dem Innenmantel (52) und dem Motorgehäuse (32) eine Abgabeleitung (72) angeordnet ist, die über die Auslassöffnung (84) in den Kühlkanal (42) mündet.

13. Hochdruckreinigungsgerät nach einem der Ansprüche 7 bis 12, **dadurch gekennzeichnet, dass** die Motorpumpeneinheit (12; 120; 140) mindestens eine im Kühlkanal (42) angeordnete Scheidewand (118; 122; 156) aufweist, auf deren einander abgewandten Seiten, bezogen auf die den Kühlkanal (42) durchströmende Reinigungsflüssigkeit, die Einlassöffnung (82; 154) und die Auslassöffnung (84) angeordnet sind.

14. Hochdruckreinigungsgerät nach Anspruch 13, **dadurch gekennzeichnet, dass** die mindestens eine Scheidewand (118; 122; 156) einstückig mit dem Innenmantel (52; 142) gebildet ist.

15. Hochdruckreinigungsgerät nach Anspruch 13 oder 14, **dadurch gekennzeichnet, dass** die mindestens eine Scheidewand (118) den Innenmantel (52) schraubenförmig umgibt.

16. Hochdruckreinigungsgerät nach einem der voranstehenden Ansprüche, **dadurch gekennzeichnet, dass** das mindestens eine Abstandselement (48) als radiale Rippe (56) ausgebildet ist und/oder dass das mindestens eine Abstandselement (48) sich in axialer Richtung erstreckend ausgebildet ist.

17. Hochdruckreinigungsgerät nach einem der voranstehenden Ansprüche, **dadurch gekennzeichnet, dass** das mindestens eine Abstandselement (48) sich in Richtung auf das Motorgehäuse (32) und/oder in Richtung auf den Kühlkanal (42) verbreiternd ausgebildet ist.

18. Hochdruckreinigungsgerät nach einem der voranstehenden Ansprüche, **dadurch gekennzeichnet, dass** die Motorpumpeneinheit (12; 120; 140) eine Mehrzahl von Abstandselementen (48) umfasst, insbesondere dass die Abstandselemente (48) in Umfangsrichtung des Motors (22) gleichmäßig voneinander beabstandet sind.

## Claims

1. High-pressure cleaning appliance (10) comprising at least one motor pump unit (10; 120; 140) with a motor (22) and a pump unit (34), a suction line (40) connected to the suction side of the pump unit (34), the suction line (40) having a connection (14) for connecting a supply hose for supplying the high-pressure cleaning appliance (10) with a cleaning liquid, wherein the cleaning liquid can be pressurized by means of the motor pump unit (10; 120; 140) and can be discharged by the high-pressure cleaning appliance (10) via a connection (16) for connecting a high-pressure hose (18), the connection (16) being in flow communication with a pressure outlet of the pump unit (34), the motor pump unit (10; 120; 140) comprising a motor housing (32) which surrounds the motor (22), and a cooling channel (42) as a part of the suction line (40), which cooling channel (42) surrounds the motor (22) and through which the cleaning liquid can flow for heat dissipation, in order to use the cleaning liquid conveyed by the pump assembly (34) for cooling the motor (22), the cooling channel (42) surrounding the motor housing (32), **characterized in that** the motor pump unit (12; 120; 140) comprises at least one thermally conductive spacer element (48) by way of which the cooling channel (42) is spaced in relation to the motor housing (32).

2. High-pressure cleaning appliance in accordance with claim 1, **characterized in that** the interspace (58) formed between the motor housing (32) and the cooling channel (42) and bridged by the at least one spacer element (48) is filled with gas.

3. High-pressure cleaning appliance in accordance with claim 1 or 2, **characterized in that** the at least one spacer element (48) is formed in one piece with the motor housing (32), and/or **in that** the at least one spacer element (48) is formed in one piece with an inner wall (50) of the cooling channel (42) that faces the motor housing (32).

4. High-pressure cleaning appliance in accordance with claim 3, **characterized in that** the at least one spacer element (48) together with the motor housing (32) is made of aluminium or an aluminium alloy, and/or **in that** the at least one spacer element (48) together with the inner wall (50) of the cooling channel (42) is made of aluminium or an aluminium alloy.

5. High-pressure cleaning appliance in accordance with claim 3 or 4, **characterized in that** the at least one spacer element (48) together with the motor housing (32) is produced as a die-cast part or as an extruded part, and/or **in that** the at least one spacer element (48) together with the inner wall (50) of the cooling channel (42) is produced as a die-cast part or as an extruded part.

6. High-pressure cleaning appliance in accordance with any one of the preceding claims, **characterized in that** an inner wall (50) of the cooling channel (42) that faces the motor housing (32) is shrunk onto the at least one spacer element (48).

7. High-pressure cleaning appliance in accordance with any one of the preceding claims, **characterized in that** an inner wall (50) of the cooling channel (42) that faces the motor housing (32) is configured as an inner shell (52; 142) which surrounds the motor housing (32), and around the outside of which the cleaning liquid flows.

8. High-pressure cleaning appliance in accordance with claim 7, **characterized in that** the cooling channel (42) comprises on the side that faces away from the motor housing (32) an outer wall (88) in the form of an outer shell (90; 144) surrounding the inner shell (52; 142).

9. High-pressure cleaning appliance in accordance with claim 7 or 8, **characterized in that** two walls (94, 98) arranged on the outside of the inner shell (52; 142) and spaced axially from each other delimit the cooling channel (42) in the axial direction.

10. High-pressure cleaning appliance in accordance with any one of claims 7 to 9, **characterized in that** an inlet opening (82; 156) for the cleaning liquid and an outlet opening (84) for the cleaning liquid are formed in a wall (50; 88; 94) of the cooling channel (42).

11. High-pressure cleaning appliance in accordance with claim 10, **characterized in that** the inlet opening (82) and/or the outlet opening (84) for the cleaning liquid is/are formed in the inner shell (52).

12. High-pressure cleaning appliance in accordance with claim 10 or 11, **characterized in that** a supply line (76), which opens by way of the inlet opening (82) into the cooling channel (42), is arranged in the interspace (58) between the inner shell (52) and the motor housing (32), and/or **in that** a discharge line (72), which opens by way of the outlet opening (84) into the cooling channel (42), is arranged in the interspace (58) between the inner shell (52) and the motor housing (32).

13. High-pressure cleaning appliance in accordance with any one of claims 7 to 12, **characterized in that** the motor pump unit (12; 120; 140) comprises at least one partition wall (118; 122; 156), which is arranged in the cooling channel (42), and on whose sides that face away from each other, in relation to the cleaning liquid flowing through the cooling channel (42), are arranged the inlet opening (82; 154) and the outlet opening (84).

14. High-pressure cleaning appliance in accordance with claim 13, **characterized in that** the at least one partition wall (118; 122; 156) is formed in one piece with the inner shell (52; 142).

15. High-pressure cleaning appliance in accordance with claim 13 or 14, **characterized in that** the at least one partition wall (118) surrounds the inner shell (52) helically.

16. High-pressure cleaning appliance in accordance with any one of the preceding claims, **characterized in that** the at least one spacer element (48) is formed as a radial rib (56), and/or **in that** the at least one spacer element (48) is formed so as to extend in the axial direction.

17. High-pressure cleaning appliance in accordance with any one of the preceding claims, **characterized in that** the at least one spacer element (48) is formed so as to widen in the direction towards the motor housing (32) and/or in the direction towards the cooling channel (42).

18. High-pressure cleaning appliance in accordance with any one of the preceding claims, **characterized in that** the motor pump unit (12; 120; 140) comprises a plurality of spacer elements (48), in particular, **in that** the spacer elements (48) are spaced uniformly from one another in the circumferential direction of the motor (22).

## Revendications

1. Appareil de nettoyage haute pression (10) comportant au moins une unité motopompe (10 ; 120 ; 140) pourvue d'un moteur (22) et d'un groupe de pompage (34), une conduite d'aspiration (40) qui est raccordée côté aspiration au groupe de pompage (34) et qui comporte un raccord (14) pour le raccordement d'un tuyau d'alimentation, afin d'amener un liquide de nettoyage à l'appareil de nettoyage haute pression (10), dans lequel le liquide de nettoyage peut être mis sous pression au moyen de l'unité motopompe (10 ; 120 ; 140) et peut être distribué par l'appareil de nettoyage haute pression (10) au moyen d'un raccord (16) servant au raccordement d'un tuyau haute pression (18), dans lequel le raccord (16) est en liaison fluidique avec une sortie de pression du groupe de pompage (34), dans lequel l'unité motopompe (10 ; 120 ; 140) comporte un carter de moteur (32) entourant le moteur (22) et comporte un canal de refroidissement (42) entourant le moteur (22) et pouvant être traversé par le liquide de nettoyage aux fins d'évacuation de la chaleur, en tant qu'élément constitutif de la conduite d'aspiration (40), afin d'utiliser le liquide de nettoyage refoulé par le groupe de pompage (34) pour refroidir le moteur (22), dans lequel le canal de refroidissement (42) entoure le carter de moteur (32), **caractérisé en ce que** l'unité motopompe (12 ; 120 ; 140) comporte au moins un élément d'écartement (48) thermo-conducteur, par l'intermédiaire duquel le canal de refroidissement (42) est espacé du carter de moteur (32).

2. Appareil de nettoyage haute pression selon la revendication 1, **caractérisé en ce que** l'espace intermédiaire (58) formé entre le carter de moteur (32) et le canal de refroidissement (42) et comblé par au moins un élément d'écartement (48) est rempli de gaz.

3. Appareil de nettoyage haute pression selon la revendication 1 ou 2, **caractérisé en ce que** ledit au moins un élément d'écartement (48) est réalisé d'une seule pièce avec le carter de moteur (32) et/ou **en ce que** ledit au moins un élément d'écartement (48) est réalisé d'une seule pièce avec une paroi intérieure (50) du canal de refroidissement (42) tournée vers le carter de moteur (32).

4. Appareil de nettoyage haute pression selon la revendication 3, **caractérisé en ce que** ledit au moins un élément d'écartement (48) est fabriqué en aluminium ou à partir d'un alliage d'aluminium tout ensemble avec le carter de moteur (32) et/ou **en ce que** ledit au moins un élément d'écartement (48) est fabriqué en aluminium ou à partir d'un alliage d'aluminium tout ensemble avec la paroi intérieure (50) du canal de refroidissement (42).

5. Appareil de nettoyage haute pression selon la revendication 3 ou 4, **caractérisé en ce que** ledit au moins un élément d'écartement (48) est fabriqué sous la forme d'une pièce coulée sous pression ou d'une pièce extrudée tout ensemble avec le carter de moteur (32) et/ou **en ce que** ledit au moins un élément d'écartement (48) est fabriqué sous la forme d'une pièce coulée sous pression ou d'une pièce extrudée tout ensemble avec la paroi intérieure (50) du canal de refroidissement (42).

6. Appareil de nettoyage haute pression selon l'une quelconque des revendications précédentes, **caractérisé en ce qu'**une paroi intérieure (50) du canal de refroidissement (42) tournée vers le carter de moteur (32) est frettée sur ledit au moins un élément d'écartement (48).

7. Appareil de nettoyage haute pression selon l'une quelconque des revendications précédentes, **caractérisé en ce qu'**une paroi intérieure (50) du canal de refroidissement (42) tournée vers le carter de moteur (32) est réalisée sous la forme d'une enveloppe intérieure (52 ; 142) qui entoure ledit carter et qui est baignée extérieurement par le liquide de nettoyage.

8. Appareil de nettoyage haute pression selon la revendication 7, **caractérisé en ce que** le canal de refroidissement (42) comporte sur la face opposée au carter de moteur (32) une paroi extérieure (88) entourant l'enveloppe intérieure (52 ; 142) et réalisée sous la forme d'une enveloppe extérieure (90 ; 144).

9. Appareil de nettoyage haute pression selon la revendication 7 ou 8, **caractérisé en ce que** deux parois (94, 98) espacées axialement l'une de l'autre et agencées extérieurement sur l'enveloppe intérieure (52 ; 142) délimitent le canal de refroidissement (42) dans la direction axiale.

10. Appareil de nettoyage haute pression selon l'une quelconque des revendications 7 à 9, **caractérisé en ce qu'**un orifice d'entrée (82 ; 156) pour le liquide de nettoyage et un orifice de sortie (84) pour le liquide de nettoyage sont formés dans une paroi (50 ; 88 ; 94) du canal de refroidissement (42).

11. Appareil de nettoyage haute pression selon la revendication 10, **caractérisé en ce que** l'orifice d'entrée (82) et/ou l'orifice de sortie (84) pour le liquide de nettoyage est/sont formé(s) dans l'enveloppe intérieure (52).

12. Appareil de nettoyage haute pression selon la revendication 10 ou 11, **caractérisé en ce qu'**une conduite d'amenée (76), qui débouche dans le canal de refroidissement (42) par l'intermédiaire de l'orifice d'entrée (82), est agencée dans l'espace intermédiaire (58) entre l'enveloppe intérieure (52) et le carter de moteur (32), et/ou **en ce qu'**une conduite de distribution (72), qui débouche dans le canal de refroidissement (42) par l'intermédiaire de l'orifice de sortie (84), est agencée dans l'espace intermédiaire (58) entre l'enveloppe intérieure (52) et le carter de moteur (32).

13. Appareil de nettoyage haute pression selon l'une quelconque des revendications 7 à 12, **caractérisé en ce que** l'unité motopompe (12 ; 120 ; 140) comprend au moins une cloison (118 ; 122 ; 156) agencée dans le canal de refroidissement (42) et sur les faces opposées les unes aux autres de laquelle, en ce qui concerne le liquide de nettoyage traversant le canal de refroidissement (42), sont agencés l'orifice d'entrée (82 ; 154) et l'orifice de sortie (84).

14. Appareil de nettoyage haute pression selon la revendication 13, **caractérisé en ce que** ladite au moins une cloison (118 ; 122 ; 156) est formée d'une seule pièce avec l'enveloppe intérieure (52 ; 142).

15. Appareil de nettoyage haute pression selon la revendication 13 ou 14, **caractérisé en ce que** ladite au moins une cloison (118) entoure l'enveloppe intérieure (52) de manière hélicoïdale.

16. Appareil de nettoyage haute pression selon l'une quelconque des revendications précédentes, **caractérisé en ce que** ledit au moins un élément d'écartement (48) est réalisé sous la forme d'une nervure radiale (56) et/ou **en ce que** ledit au moins un élément d'écartement (48) est réalisé de manière à s'étendre dans la direction axiale.

17. Appareil de nettoyage haute pression selon l'une quelconque des revendications précédentes, **caractérisé en ce que** ledit au moins un élément d'écartement (48) est réalisé de manière à s'élargir en direction du carter de moteur (32) et/ou en direction du canal de refroidissement (42).

18. Appareil de nettoyage haute pression selon l'une quelconque des revendications précédentes, **caractérisé en ce que** l'unité motopompe (12 ; 120 ; 140) comporte une pluralité d'éléments d'écartement (48), en particulier **en ce que** les éléments d'écartement (48) sont espacés régulièrement les uns des autres dans la direction périphérique du moteur (22).
